# EUROPÄISCHE PATENTSCHRIFT

(11) **EP 2 484 512 B1**
(45) Veröffentlichungstag und Bekanntmachung des Hinweises auf die Patenterteilung: **26.06.2013**
(21) Anmeldenummer: 12150697.6
(22) Anmeldetag: 11.01.2012
(51) Int. Cl.: B29C 67/00, B22F 3/105, B29B 13/00

(54) **Verfahren zur besseren Inertisierung von Lasersinteranlagen**
Method for improved inertisation of laser sintering assemblies
Procédé d'inertisation améliorée d'installations de frittage laser

(30) Priorität: 03.02.2011 DE 102011003610
(43) Veröffentlichungstag der Anmeldung: 08.08.2012
(73) Patentinhaber: Evonik Degussa GmbH, 45128 Essen (DE)
(72) Erfinder: Grebe, Maik, 44805 Bochum (DE); Diekmann, Wolfgang, 45731 Waltrop (DE); Altkemper, Stefan, 46282 Dorsten (DE)

(56) Entgegenhaltungen:
- WO-A1-2009/014718
- WO-A1-2010/007394
- DE-A1-102005 014 483
- US-A1- 2010 090 374

## Beschreibung

Die zügige Bereitstellung von Prototypen ist eine in der jüngsten Zeit häufig gestellte Aufgabe. Verfahren die dies ermöglichen werden Rapid Prototyping/ Rapid Manufacturing oder auch Additive Fabrication- Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Ein Verfahren, welches besonders gut für den Zweck des Rapid Prototypings/Rapid Manufacturing geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6136948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1015214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE10356193 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in z. B. in EP1737646 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyestern, Polyvinylchlorid, Polyacetalen, Polypropylen, Polyethylen, Polystyrol, Polycarbonat, Poly-(N-methylmethacrylimiden) (PMMI), Polymethylmethacrylat (PMMA), lonomer, Polyamiden, oder Gemischen davon eingesetzt werden.

Bei der Verarbeitung von Polymerpulvern ist oft eine erhöhte Bauraumtemperatur notwendig, um Schwindungs- und Verzugsprobleme zu vermeiden. Diese notwendige Bauraumtemperatur, auch Verarbeitungstemperatur genannt, ist abhängig von dem zu verarbeitenden Polymerpulver und liegt meist nur wenig unterhalb des Schmelzpunktes des zu verarbeiten Materials. Ein Problem bei diesen Verfahren ist der schädliche Einfluss des Luftsauerstoffs. Die hohen Temperaturen bei der Verarbeitung führen zu Schädigungen des zu verarbeitenden Polymers. Aus diesem Grund wird bei der Verarbeitung der Bauraum in der Regel mit einem Schutzgas inertisiert. Dabei wird beispielsweise während des gesamten Prozesses der Bauraum dauerhaft mit Stickstoff gespült. Eine dauerhafte Spülung ist notwendig, da z. B. durch Leckagen an der Maschine das Inertgas aus dem Bauraum entweicht. Bei Bereitstellung von Stickstoff durch einen Generator kann die notwendige Reinheit nicht gewährleistet werden, so dass der Anteil an Restsauerstoff immer noch zu hoch ist. Auf der anderen Seite ist die Spülung des Bauraums mit entsprechend reinem Stickstoff kostspielig. Da die Einsatzgebiete für Bauteile der genannten Verfahren ständig erweitert werden, steigen auch die Anforderungen an die Eigenschaften der Bauteile. So sind viele Anforderungen zukünftig nur noch mit Materialien zu erfüllen, die einen höheren Schmelzpunkt besitzen als bisher eingesetzte Materialien. Die damit verbundenen höheren Verarbeitungstemperaturen erfordern dann eine bessere Inertisierung, da die schädliche Wirkung des Sauerstoffs bei der Verarbeitung üblicherweise mit steigenden Temperaturen zunimmt.

Die drei Dokumente DE 102005014483 A1, WO 2012/007394 A1 und US 2010/090374 A1 beschreiben Vorrichtung zur Herstellung dreidimensionater Objekte. Dabei wird ein inertes Gas wie Argon in den Bauraum geleitet. US 2010/090374 A1 offenbart ein Verfahren gemäß dem Oberbegriff des Anspruchs 1. Gemäß WO 2012/007394 A1 wird ein Schutzgas über mehrere Leitungen in den Bauraum geführt, wobei der Druck in den entsprechenden Leitungen über Ventile gesteuert werden kann.

In entsprechenden Anlagen gemäß dem Stand der Technik wird das Inertgas meist über die Linse und das Pyrometer derart eingeleitet, dass damit Ablagerungen an Linse und Pyrometer verhindert werden. Zugleich kühlt das Inertgas die Linse und das Pyrometer. Damit ein entsprechender Kühleffekt erzielt wird, muss das Inertgas eine im Vergleich zur Bauraumtemperatur deutlich geringere Temperatur aufweisen. Dies hat aber den Nachteil, dass das kühle Inertgas den Bauraum und insbesondere das Pulver im Baufeld stark abkühlt. Dies stört den Bauprozess, da die Temperatur nachgeregelt werden muss, um Verzugseffekte zu vermeiden. Zudem treten durch das kühle Inertgas verstärkt Verwirbelungen im Bauraum auf.

Aufgabe der vorliegenden Erfindung ist die Bereitstellung eines vereinfachten Verfahrens zur Herstellung dreidimensionale Objekte, mit der zum einen der Durchsatz an Inertgas verringert werden kann, ohne dass der Bauprozess als solches in seiner Durchführung gestört wird bzw. die Qualität der erhaltenen Bauteile verringert wird. Diese Aufgabe wird durch ein Verfahren gemäß dem Anspruch 1 gelöst.

Durch eine Spülung des Bauraums mit einem Inertgas welches schwerer als Luft ist, konnte überraschenderweise eine deutlich verbesserte Inertisierung erreicht werden.

Es ist zudem eine deutlich geringere Menge an Inertgas notwendig, um eine gute Inertisierung zu erreichen. Demgemäß ist ein erster Gegenstand der vorliegenden Erfindung ein Verfahren zur schichtweisen Herstellung von dreidimensionalen Objekten, wobei die Inertisierung des Bauraums mit einem reaktionsträgen Gas oder Gasgemisch vorgenommen wird, dessen Dichte höher als die von Luft ist. Im Rahmen der vorliegenden Erfindung wird unter Luft das Gasgemisch der Erdatmosphäre verstanden. Als reaktionsträge Gase werden im Sinne der Vorliegenden Erfindung all die Gase verstanden, die unter den Bedingungen des Verfahrens nicht mit den eingesetzten pulverförmigen Substraten reagieren. Als schwerer als Luft werden im Rahmen der vorliegenden Erfindung all die Gase oder Gasgemische angesehen, deren Dichte unter Normbedingungen größer ist als die von Luft (unter Normbedingungen (DIN 1343: Temperatur 273,15 K und Druck 1,01325 bar) ist die Luftdichte gleich 1,293 kg/m³). Geeignete Inertgase sind insbesondere Edelgase oder Edelgasverbindungen welche schwerer als Luft sind, wie z. B. Argon, Krypton, Xenon oder Xenonhexafluorid. Es sind aber auch andere schwere reaktionsträge Gase wie z. B. Kohlendioxid geeignet. Insbesondere bevorzugt werden als Inertgas Argon, Krypton, Xenon, Xenonhexafluorid und/oder Kohlendioxid eingesetzt.

Grundsätzlich eignen sich alle dem Fachmann bekannten pulverförmigen Substrate für den Einsatz in den erfindungsgemäßen Verfahren. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), lonomere, Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES)-Copolymer, Mischungen und/oder Polymerblends. lonomere sind thermoplastische Kunststoffe, die durch Copolymerisation eines unpolaren mit einem polaren Monomer gewonnen werden. Sie werden beispielsweise unter dem Handelsnamen Nafion (DuPont) vertrieben. Die polaren Bindungen drängen die Kristallisation zurück und führen zu einer "ionischen Vernetzung". Gegenüber herkömmlichen Thermoplasten haben lonomere den Vorteil, dass in ihnen sowohl Nebenvalenzkräfte als auch lonenbindungen wirksam werden. Diese lonenbindungen sind besonders fest und verleihen dem Stoff seine charakteristischen Eigenschaften.

Insbesondere bevorzugt umfasst das Polymerpulver mindestens ein Polyamid oder Polyetherketone, insbesondere Polyamid 12, Polyamid 6 oder Polyamid 6.6 oder PEEK, wobei die genannten Polyamide besonders bevorzugt sind...

Im Folgenden werden einige Verfahren beschrieben, mit denen aus dem erfindungsgemäßen Pulver erfindungsgemäße Formteile hergestellt werden können, ohne dass die Erfindung darauf beschränkt werden soll. Kombinationen der nachfolgend genannten Ausführungsformen liegen im Bereich des fachmännischen Handelns.

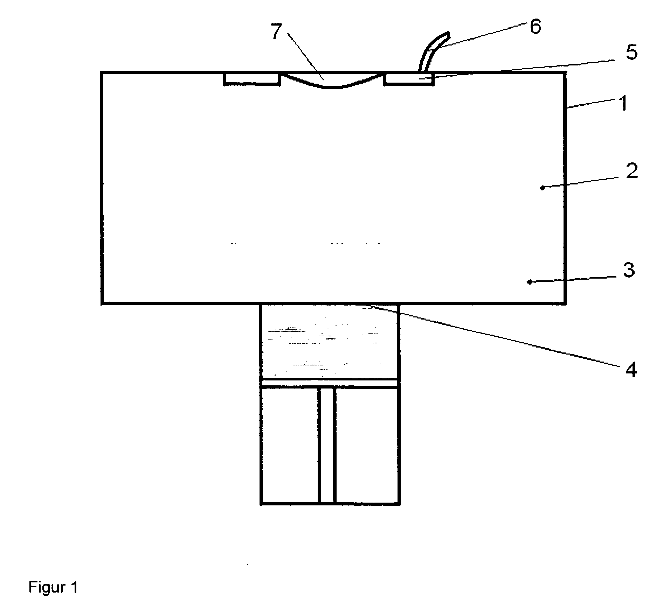

Fig. 1 zeigt das Prinzip der verbesserten Inertisierung des Bauraums (1) einer SLS-Maschine. Von Vorteil ist hier der Einsatz von Argon (3) als Inertgas, welches schwerer als Luft ist und sich so direkt auf der Pulveroberfläche (4) setzt und leichtere Luftbestandteile (2) wie Sauerstoff verdrängt. Es ist daher eine deutlich geringere Menge an Schutzgas notwendig um einen ausreichenden Schutz des zu verarbeiten Pulvermaterials zu gewährleisten. Vorteilhaft ist es, wenn das Inertgas zusätzlich dazu genutzt wird die Linse der Laseroptik von Ablagerungen zu befreien. Wird das Inertgas (6) über eine entsprechend geformte Düse (5) über die Linse eingeblasen, können Ablagerungen an der Linse (7) vermindert werden. Nach einem ähnlichen Prinzip können auch Ablagerungen an der Linse des Pyrometers vermieden werden. Da sich bei manchen Polymermaterialien flüchtige Bestandteile bevorzugt an den kältesten Stellen des Bauraums ablagern, ist es vorteilhaft das Inertgas auf das Temperaturniveau des Bauraums zu erwärmen. Die für manche Materialien notwendige Bauraumtemperatur kann in einem für die Linse schädlich hohen Temperaturbereich liegen. In diesen Fall kann die Spülung der Linse mit einem Inertgas auch zur Kühlung verwendet werden. Die Temperatur des Inertgases muss in diesem Fall entsprechend niedriger eingestellt werden.

Eine weitere Verbesserung der Inertisierung kann dadurch erzielt werden, dass nicht nur das Pulver im Bauraum inertisiert wird, sondern zusätzlich auch das Pulver in den Vorratsbehältern. Demgemäß wird also zusätzlich die eingesetzten pulverförmigen Substrate in den Vorratsbehältern mit einem reaktionsträgen Gas oder Gasgemisch inertisiert. Ein längeres Spülen mit einem Inertgas ist notwendig, um den Sauerstoff aus den teilweise porösen Pulverwerkstoffen zu beseitigen. So wird verhindert, dass der an den porösen Werkstoffen anhaftende Sauerstoff in das Baufeld miteingebracht wird. Bei dieser Ausführungsform kann die Inertisierung des Vorratsbehälters mit einem Stickstoff-haltigen Gasgemisch erfolgen.

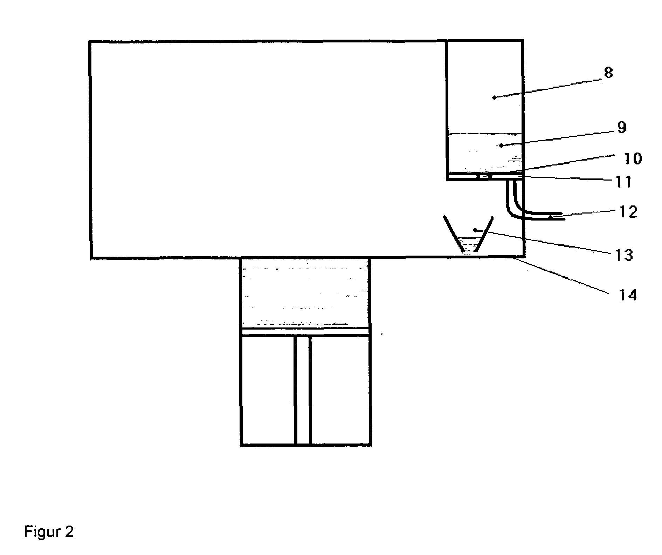

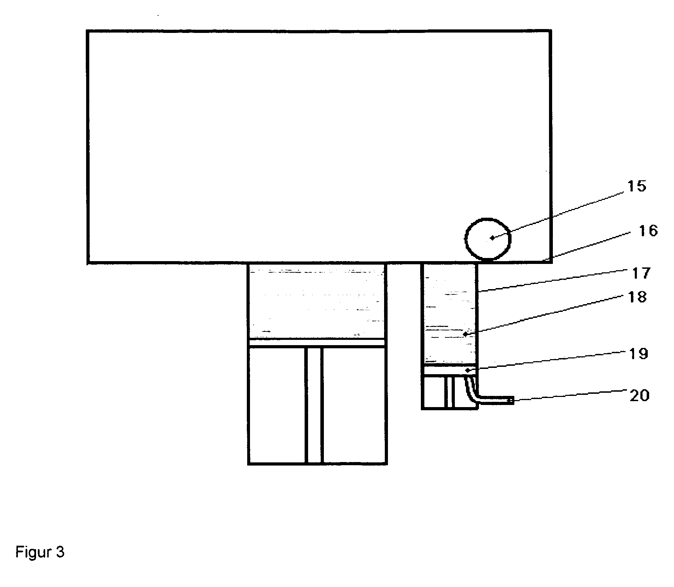

In einer in Figur 2 dargestellten Ausführungsform wird der über der Bauebene (14) liegende Vorratsbehälter (8) von unten mit einem Inertgas (12) durchströmt. Durch einen Siebboden (11) lässt sich mittels des Inertgases das darüber liegende Pulver (9) fluidisieren. Dies ermöglicht eine besonders gleichmäßige Durchströmung des Pulvers mit dem Inertgas und stellt somit sicher, dass der Luftsauerstoff aus der Pulverschüttung entweicht. Der Siebboden kann mit einer Dosiereinrichtung (10) kombiniert werden, durch die dann der Recoater (13) befüllt wird. In einer in Figur 3 dargestellten weiteren Ausführungsform wird der unter der Bauebene (16) liegende Vorratsbehälter (17) von unten mit einem Inertgas (20) durchströmt. Durch einen Siebboden (19) ist es auch hier möglich das Inertgas besonders gleichmäßig in das Pulver (18) einzubringen. Mit einem Recoater (15) kann dann das vom Luftsauerstoff befreite Pulver aufgetragen werden.

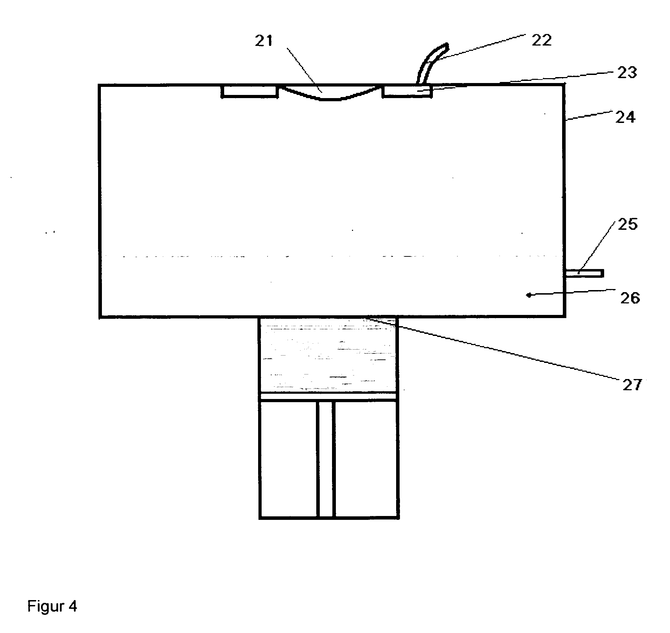

Gemäß der Erfindung wird im Figur 4 das Problem des störenden Einflusses des kalten Inertgases gelöst, welches dann auftritt, wenn ein Material verarbeitet wird, welches eine hohe Bauraumtemperatur erfordert und eine Kühlung von Linse und Pyrometer notwendig wird. Nach dieser Ausführungsform des erfindungsgemäßen Verfahrens wird, getrennt von der Inertisierung des Bauraums, zusätzlich Linse und Pyrometer mit einem reaktionsträgen Gas oder Gasgemisch gespült und damit gekühlt. Der Bauraum (24) wird hier durch getrennt eingeführte Gase inertisiert. Das Inertgas (25) wird mit einer Temperatur nahe der Bauraumtemperatur, welche gewöhnlich nur wenig unterhalb der Schmelztemperatur des zu verarbeitenden Materials liegt, in den Bauraum geleitet. Diese Bauraumtemperatur liegt üblicherweise im Bereich von 60 bis 400, insbesondere 120 bis 330 und ganz besonders bevorzugt im Bereich von 160 bis 220°C. Die Temperatur des in den Bauraum geleiteten Inertgases liegt vorzugsweise maximal 30°C, insbesondere maximal 20°C und ganz besonders bevorzugt maximal 10°C unterhalb der Prozesstemperatur. Der untere Bereich des Bauraums (26) wird so inertisiert und zugleich wird ein starkes Abkühlen der Pulveroberfläche (27) vermieden. Das Inertgas (22), welches deutlich kühler ist, wird über eine Düse (23) eingeleitet, um Linse (21) und Pyrometer zu kühlen. Eine besonders vorteilhafte Ausführungsform liegt vor, wenn für die Spülung, oder auch Kühlung; von Linse und Pyrometer ein Inertgas mit einer geringeren Dicht als Luft, beispielsweise ein Stickstoff-haltiges Gasgemisch, genutzt wird und gleichzeitig für die Inertisierung der Pulveroberfläche ein Inertgas mit einer möglichst hohen Dichte, beispielsweise Argon, gewählt wird. Bei einer sehr hohen Bauraumtemperatur kann es notwendig sein, für den unteren Bereich des Bauraums ein noch dichteres Inertgas wie z. B, Xenon zu wählen, um zu verhindern, dass das kältere Inertgas der Linsenkühlung zur Pulveroberfläche durchdringt und das dortige Pulvermaterial abkühlt.

Bei allen Ausführungsformen ist ein gut abgedichteter Bauraum von Vorteil, da durch einen geringeren Verlust von Inertgas an die Umgebung auch weniger Inertgas verbraucht wird. Massnahmen zur entsprechenden Abdichtung des Bauraums sind dem Fachmann hinlänglich bekannt und können in beliebiger Weise eingesetzt werden. Zur Vermeidung von zu großem Überdrück kann ein Überdruckventil dienen. Bei einem Inertgas, welches schwerer als Luft ist, sollte die Position des Überdruckventils deutlich über der Bauebene gewählt werden.

Vorrichtungen zur schichtweisen Herstellung von dreidimensionalen Objekten, mindestens umfassend einen Bauraum und einen daran angeschlossenen Durchlass für reaktionsträge Gase oder Gasgemische, deren Dichte höher als die von Luft ist, zur Durchführung des erfindungsgemäßen Verfahrens sind offenbart. Entsprechende Ausführungsformen von Vorrichtungen können den Abbildungen entnommen werden. In der Regel weist eine solche Vorrichtung einen Bauraum mit einer höheneinstellbaren Bauplattform, einer Vorrichtung zum Aufbringen einer Schicht eines durch Einwirkung elektromagnetischer Strahlung verfestigbaren Materials auf die Bauplattform, einer Bestrahlungseinrichtung umfassend eine elektromagnetische Strahlung emittierende Strahlungsquelle, eine Steuerungseinheit und eine im Strahlengang der elektromagnetischen Strahlung befindliche Linse, zum Bestrahlen von dem Objekt entsprechenden Stellen der Schicht auf.

## Patentansprüche

1. Verfahren zur schichtweisen Herstellung von dreidimensionalen Objekten, wobei
die Inertisierung des Bauraums mit einem reaktionsträgen Gas oder Gasgemisch vorgenommen wird, dessen Dichte höher als die von Luft ist, wobei dieses Gas oder Gasgemisch auf eine Temperatur auf dem Niveau des Bauraums temperiert wird, und **dadurch gekennzeichnet, daß** getrennt von der Inertisierung des Bauraums zusätzlich Linse und Pyrometer mit einem Inertgas gespült und gekühlt werden.

2. Verfahren nach Anspruch 1,
**dadurch gekennzeichnet,**
**dass** als reaktionsträges Gas oder Gasgemisch bzw. Inertgas Edelgase oder Edelgasverbindungen eingesetzt werden.

3. Verfahren nach einem der vorhergehenden Ansprüche,
**dadurch gekennzeichnet,**
**dass** als reaktionsträges Gas oder Gasgemisch bzw. Inertgas Argon, Krypton, Xenon, Xenonhexafluorid und/oder Kohlendioxid eingesetzt wird.

4. Verfahren nach einem der vorhergehenden Ansprüche
**dadurch gekennzeichnet,**
**dass** zusätzlich die eingesetzten pulverförmigen Substrate in den Vorratsbehältern mit einem reaktionsträgen Gas oder Gasgemisch inertisiert wird.

5. Verfahren nach Anspruch 4,
**dadurch gekennzeichnet,**
**dass** die Inertisierung in den Vorratsbehältern mit einem Stickstoff-haltigen Gasgemisch erfolgt.

6. Verfahren nach einem der vorhergehenden Ansprüche,
**dadurch gekennzeichnet,**
**dass** die Spülung von Linse und Pyrometer mit einem Inertgas mit einer geringeren Dicht als Luft erfolgt.

7. Verfahren nach einem der vorhergehenden Ansprüche,
**dadurch gekennzeichnet,**
**dass** der Bauraum gasdicht ausgestaltet ist.

## Claims

1. Process for the layer-by-layer production of three-dimensional objects, wherein
an unreactive gas or gas mixture with a density higher than that of air is used to inertize the construction chamber, wherein the temperature of this gas or gas mixture is controlled to a temperature at the level of the construction chamber, **characterized in that**, separately from the inertization of the construction chamber, additionally the lens and the pyrometer are flushed and cooled with an inert gas.

2. Process according to Claim 1,
**characterized**
**in that** noble gases or noble gas compounds are used as the unreactive gas or gas mixture or inert gas.

3. Process according to either of the preceding claims,
**characterized**
**in that** argon, krypton, xenon, xenon hexafluoride and/or carbon dioxide is used as the unreactive gas or gas mixture or inert gas.

4. Process according to one of the preceding claims,
**characterized**
**in that** in addition the pulverulent substrates used are inertized in the feed containers with an unreactive gas or gas mixture.

5. Process according to Claim 4,
**characterized**
**in that** the inertization in the feed containers is effected with a nitrogen-containing gas mixture.

6. Process according to one of the preceding claims,
**characterized**
**in that** the lens and the pyrometer are flushed with an inert gas having a lower density than air.

7. Process according to one of the preceding claims,
**characterized**
**in that** the construction chamber has a gas-tight configuration.

## Revendications

1. Procédé pour la fabrication par couches d'objets tridimensionnels, dans lequel l'inertisation de l'espace de construction est effectuée avec un gaz non réactif ou mélange de tels gaz, dont la densité est supérieure à celle de l'air, ce gaz ou mélange de gaz étant maintenu à une température au niveau de celle de l'espace de construction, et **caractérisé en ce que** séparément de l'inertisation de l'espace de construction lentille et pyromètre sont balayés et refroidis avec un gaz inerte.

2. Procédé selon la revendication 1,
**caractérisé**
**en ce qu'**on utilise comme gaz non réactif ou mélange de tels gaz ou gaz inerte des gaz rares ou des composés de gaz rares.

3. Procédé selon l'une quelconque des revendications précédentes,
**caractérisé**
**en ce qu'**on utilise comme gaz non réactif ou mélange de tels gaz ou gaz inerte l'argon, le krypton, le xénon, l'hexafluorure de xénon et/ou le dioxyde de carbone.

4. Procédé selon l'une quelconque des revendications précédentes,
**caractérisé**
**en ce qu'**en outre les substrats pulvérulents utilisés dans les réservoirs sont rendus inertes avec un gaz non réactif ou un mélange de tels gaz.

5. Procédé selon la revendication 4,
**caractérisé en ce que**
l'inertisation dans les réservoirs s'effectue avec un mélange de gaz contenant de l'azote.

6. Procédé selon l'une quelconque des revendications précédentes,
**caractérisé en ce que**
le balayage de la lentille et du pyromètre s'effectue avec un gaz inerte ayant une densité plus faible que celle de l'air.

7. Procédé selon l'une quelconque des revendications précédentes,
**caractérisé en ce que**
l'espace de construction est conçu étanche aux gaz.
